# EUROPEAN PATENT APPLICATION

(11) **EP 0 930 128 A1**
(43) Date of publication of application: **21.07.1999**
(21) Application number: 99100726.1
(22) Date of filing: 15.01.1999
(51) Int. Cl.: B23P 19/08, B67D 1/08

(54) **Method for fitting a seal ring and apparatus therefor**

(30) Priority: 20.01.1998 JP 886298
(71) Applicant: SUNTORY LIMITED, Osaka-shi, Osaka 530-8203 (JP); Nigata Engineering Co., LTD., Tokyo (JP)
(72) Inventor: Yamamoto, Takanobu, Souraku-gun, Kyoto-fu 619-0223 (JP); Yoneda, Koichi, Nagaokakyo-shi, Kyoto-fu 617-0833 (JP); Nakajima, Keizo c/o Technology R & D Center, Yokohama-city, Kanagawa-pref. 235-0017 (JP); Shimizu, Hiroyuki c/o Technology R & D Center, Yokohama-city, Kanagawa-pref. 235-0017 (JP)
(74) Representative: Kern, Wolfgang, Dipl.-Ing.

(57) **Abstract**

The invention relates to a method and apparatus for fitting a seal ring (104) onto an outer peripheral surface of a cylindrical spire tube body (102A) by easily expanding the seal ring to substantially a round shape securely without twisting it. For fitting a seal ring on an outer peripheral surface of a cylindrical spire tube body, the invention arranges four or more expansion nibs (45) in the form of a circle; sets the seal ring (104) around the respective expansion nibs (45) by centering the four or more expansion nibs; expands a diameter of the seal ring in a state engaged with the respective expansion nibs (45) by opening the respective expansion nibs radially from the center; positions the cylindrical spire tube body (102A) in its axial direction and a direction perpendicular to the axial direction by moving the cylindrical spire tube body and puts it through the expanded seal ring; and fits the seal ring onto the cylindrical spire tube body by releasing the seal ring (104) from being engaged with the respective expansion nibs by means of the four or more disengaging nibs (51) disposed so to correspond with the respective expansion nibs.

## Description

### Detailed Description of the Invention

### Technical Field of the Invention

The invention relates to a method for fitting a seal ring on a cylindrical spire tube body and an apparatus thereof.

### Description of the Related Art

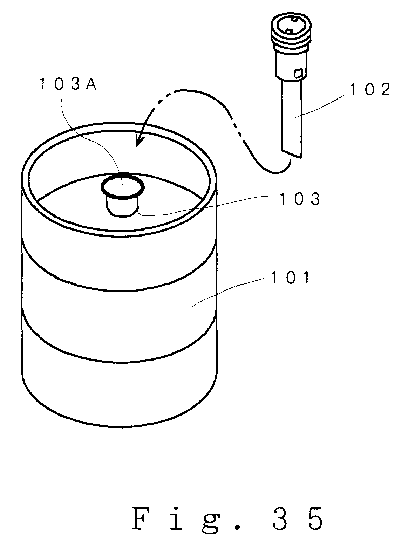

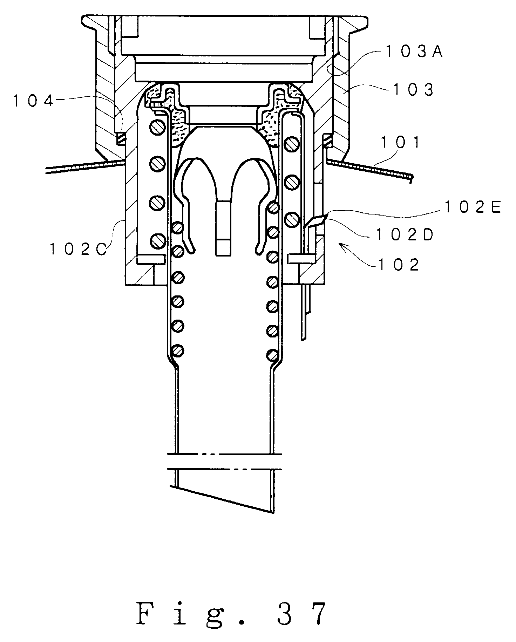

For example, in the field of food containers, a cylindrical spire tube fitted in a container such as a keg is fitted a seal ring for complete sealing. And the seal ring is required to be readily expanded and securely fitted. For example, Fig. 35 shows that when a cylindrical spire tube (not shown) used for a beer keg 101 and required to be checked for maintenance is replaced by a maintained cylindrical spire tube 102 to keep the beer keg 101 in good condition, the cylindrical spire tube 102 is threaded into an opening 103A of a neck portion 103 of the beer keg 101 as shown in Fig. 37. This cylindrical spire tube 102 is previously fitted a new seal ring 104 for the keg neck.

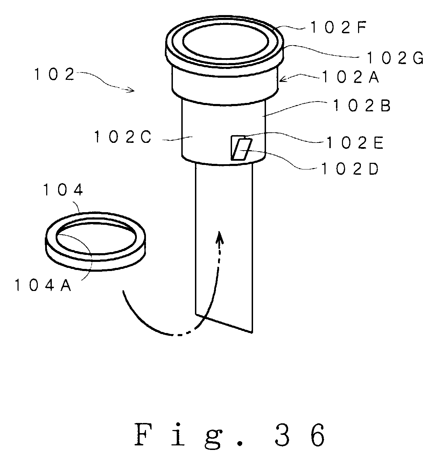

Fig. 36 shows that the seal ring 104 has rubber-like properties and its inner diameter is smaller than a diameter of an outer peripheral surface 102C of a step portion 102B of a cylindrical spire tube body 102A.

As a material for the seal ring 104, ethylen propylene rubber having the following properties is used. Ethylene propylene rubber produced by press vulcanization at 170°C for 10 minutes has a tensile strength at 300% elongation of 150 kgf/cm², a tensile strength at break of 214 kgf/cm², an elongation at break of 420%, and hardness Hₛ (JIS-A) of 72. Hardness Hₛ of ethylene propylene rubber is called spring hardness, which indicates a distance that a spindle pushed by a spring to protrude out of a hole at the center of a pressure surface when it is contacted to the surface of a test sample (JIS K6301-1975) .

On the step portion 102B of the cylindrical spire tube 102, a stopper portion 102D with its tip 102E protruded upward in a radial direction externally from the opening 103A of the neck portion 103 of the beer keg 101 as shown in the drawing. The stopper portion 102D serves to prevent the cylindrical spire tube body 102A from separating from the opening 103A.

As shown in Fig. 36, when the seal ring 104 is fitted on the outer peripheral surface 102C of the step portion 102B of the cylindrical spire tube body 102A, the seal ring 104 is expanded manually to a size large enough to clear the tip 102E of the stopper portion 102D of the cylindrical spire tube body 102A and inserted on the outer peripheral surface 102C of the step portion 102B of the cylindrical spire tube body 102A by fitting it from the end (the bottom side in Fig. 36) of the outer peripheral surface 102C and pushing manually toward the step portion 102B of the cylindrical spire tube body 102A. Thus, the cylindrical spire tube 102 is assembled.

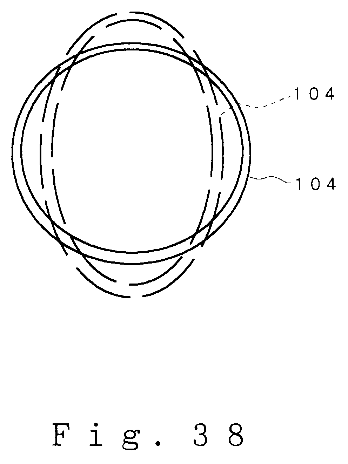

However, it is hard to uniformly expand the seal ring 104 to a substantially round shape by hands to fit it around the outer peripheral surface 102C of the step portion 102B of the cylindrical spire tube body 102A. For example, the seal ring 104 is often made to have two edged points as shown in Fig. 38, locally deformed portions or twisted shape.

Particularly, the seal ring 104 is largely deformed because it must be fitted to the step portion 102B of the cylindrical spire tube body 102A over the protruded stopper portion 102D, and its twisting is a serious problem. Therefore, it takes a long time to fit the seal ring 104 because its deformation or twisting must be removed repeatedly by hands.

### Summary of the Invention

The invention was achieved in order to solve the problems described above. It is an object of the invention to provide a method for fitting a seal ring to the outer peripheral surface of a cylindrical spire tube body by readily and securely expanding the seal ring to a substantially round shape without being twisted and an apparatus therefor.

It is another object of the invention to provide a method for fitting a seal ring and an apparatus therefor which can secure sealing performance of the seal ring by eliminating a twisting phenomenon which is caused when the seal ring is fitted.

It is also another object of the invention to provide a method for fitting a seal ring and an apparatus therefor which can readily prepare to set a seal ring securely with ease.

It is still another object of the invention to provide a method for fitting a seal ring and an apparatus therefor which can automate the supply of a seal ring to a seal ring fitting apparatus.

In order to achieve the objects described above, a seal ring fitting method according to the invention comprises, for fitting a seal ring on an outer peripheral surface of a cylindrical spire tube body, arranging four or more expansion nibs in the form of a circle; setting the seal ring around the respective expansion nibs by centering the four or more expansion nibs; expanding a diameter of the seal ring in a state engaged with the respective expansion nibs by opening the respective expansion nibs radially from the center; positioning the cylindrical spire tube body in its axial direction and a direction perpendicular to the axial direction by moving the cylindrical spire tube body and putting it through the expanded seal ring; and fitting the seal ring onto the cylindrical spire tube body by releasing the seal ring from being engaged with the respective expansion nibs by means of the four or more disengaging nibs disposed so to correspond with the respective expansion nibs.

And, a seal ring fitting apparatus according to the invention comprises a seal ring supply device for transferring a seal ring; a spire tube supply regulating device which is configured to supply and remove a cylindrical spire tube body and positions the cylindrical spire tube body in its axial direction and a direction perpendicular to the axial direction; and a seal ring fitting device which fits the seal ring transferred by the seal ring supply device onto the outer peripheral surface of the cylindrical spire tube body positioned by the spire tube supply regulating device, wherein the seal ring fitting device comprises a ring rest for receiving the seal ring transferred by the seal ring supply device; four or more expansion nibs which are disposed toward the inside of the ring rest and to form a circle and selected to have a closed state by contracting inward so to insert the seal ring thereon or an open state by opening outward so to expand the diameter of the seal ring; a seal ring diameter expanding means which has actuators connected to the respective expansion nibs; four or more disengaging nibs which are arranged to correspond with the respective expansion nibs to withdraw the seal ring engaged with the respective expansion nibs from the respective expansion nibs; and a seal ring removing means having an actuator for transferring the disengaging nibs.

### Brief Description of the Drawings

Fig. 1 is an entire front diagram of an apparatus for fitting a seal ring according to an embodiment of the invention;
Fig. 2 is an entire plan diagram of the same apparatus for fitting a seal ring;
Fig. 3 is an entire side diagram showing a device for supplying a seal ring;
Fig. 4 is an entire side diagram showing a seal ring fitting device and a spire tube supply restricting device;
Fig. 5 is a side diagram showing the device for supplying a seal ring;
Fig. 6 is a front diagram showing the device for supplying a seal ring;
Fig. 7 is a side diagram showing the spire tube supply restricting device;
Fig. 8 is a plan diagram showing the seal ring fitting device;
Fig. 9 is a front diagram showing the seal ring fitting device;
Fig. 10 is an enlarged diagram showing a relationship between the top of a core bar and a ring receiver of the seal ring supply device;
Fig. 11 is a sectional diagram taken along a dot and dashed line I-I of Fig. 8;
Fig. 12 is a sectional diagram taken along a dot and dashed line II-II of Fig. 8;
Fig. 13 is a timing chart showing a method for fitting a seal ring;
Fig. 14 is an explanatory diagram showing an initial step of the method for fitting a seal ring;
Fig. 15 is an explanatory diagram showing a loading step of a seal ring and a cylindrical spire tube body in the method for fitting a seal ring;
Fig. 16 is an explanatory diagram showing a seal ring transfer step of the method for fitting a seal ring;
Fig. 17 is an explanatory diagram showing a seal ring fitting step of the method for fitting a seal ring;
Fig. 18 is an explanatory diagram showing a cylindrical spire tube unloading step of the method for fitting a seal ring;
Fig. 19 is an explanatory diagram showing a step to remove the cylindrical spire tube according to the method for fitting the seal ring;
Fig. 20 is an explanatory diagram showing a first sub-step of the seal ring loading step;
Fig. 21 is an explanatory diagram showing a second sub-step of the seal ring loading step;
Fig. 22 is an explanatory diagram showing a third sub-step of the seal ring loading step;
Fig. 23 is an explanatory diagram showing a fourth sub-step of the seal ring loading step;
Fig. 24 is an explanatory diagram showing a fifth sub-step of the seal ring loading step;
Fig. 25 is an explanatory diagram showing a first sub-step of the seal ring fitting step;
Fig. 26 is an explanatory diagram showing a second sub-step of the seal ring fitting step;
Fig. 27 is an explanatory diagram showing a third sub-step of the seal ring fitting step;
Fig. 28 is an explanatory diagram showing a fourth sub-step of the seal ring fitting step;
Fig. 29 is an explanatory diagram showing a fifth sub-step of the seal ring fitting step;
Fig. 30 is an explanatory diagram showing a sixth sub-step of the seal ring fitting step;
Fig. 31 is an explanatory diagram showing a seventh sub-step of the seal ring fitting step;
Fig. 32 is an explanatory diagram showing an eighth sub-step of the seal ring fitting step;
Fig. 33 is an explanatory diagram of test data to show a success rate of fitting a seal ring in the fitting step;
Fig. 34 is an explanatory diagram showing an outer diameter D1 of the expansion nibs, an outer diameter D2 of the cylindrical spire tube body and a seal ring step portion level H in Table 1 and Fig. 33;
Fig. 35 is a perspective diagram showing a beer keg and a cylindrical spire tube;
Fig. 36 is a perspective diagram showing a cylindrical spire tube and a seal ring;
Fig. 37 is a sectional diagram showing a state of a cylindrical spire tube threaded into a beer keg neck; and
Fig. 38 is a plan explanatory diagram showing a defect caused when a seal ring is fitted.

### Detailed Description of the Preferred Embodiments

Embodiments of the invention will be described with reference to the accompanying drawings.

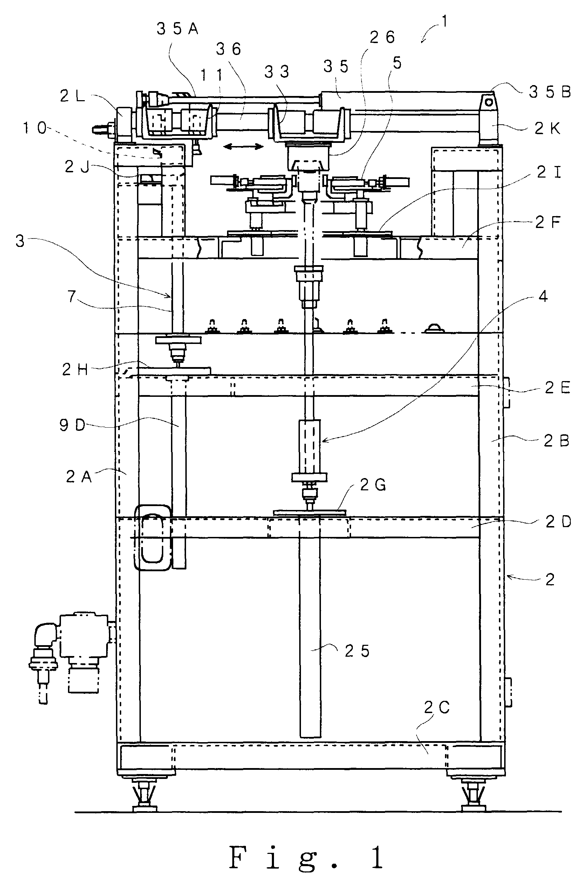

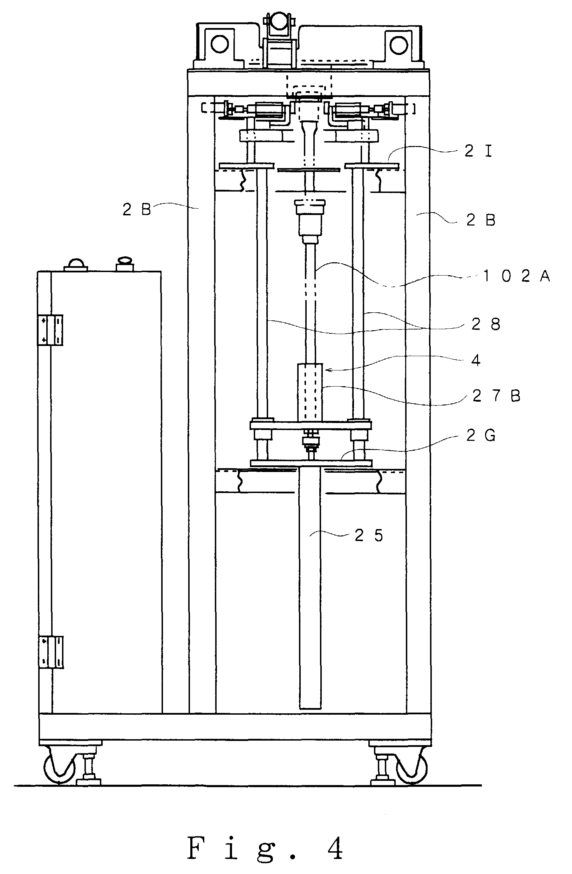

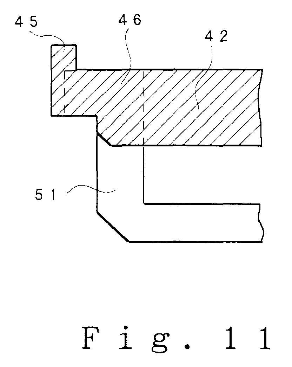

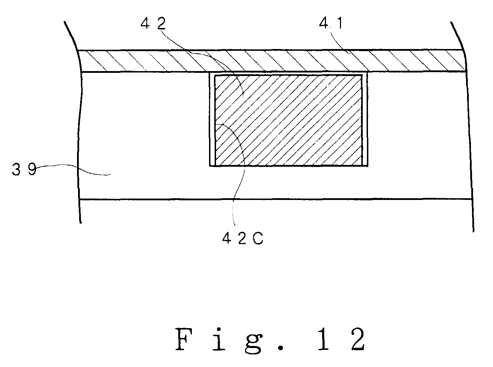

A method for fitting a seal ring and an apparatus therefor according to an embodiment of the present invention described in claims 1 through claim 6 will be described with reference to Fig. 1 through Fig. 34. Referring to a seal ring 104 for a beer keg as shown in Fig. 36, description will be made of a case to assemble a cylindrical spire tube 102 by fitting the seal ring 104 to an outer peripheral surface 102C of a step portion 102B of a cylindrical spire tube body 102A.

In this embodiment, the cylindrical spire tube body and the seal ring for a keg neck have the same structures as those described in connection with the related art and are given the same reference numerals. Description about them will be omitted. A material for the seal ring for a keg neck is also the same as the related art and has the same property values. Description about it is also omitted.

Ethylene propylene rubber as a material for the seal ring 104 has rubber-like properties. The rubber-like properties include an elastic property and also involve a twisting action (Physical properties of rubber are given in, for example, Elasticity of rubber (pages 109 to 116, Rubber) in "Continuation; Recommendation on science of physical properties", the third printing, issued by Baifukan, December 10, 1982, and page 114 of "Rubber", the first printing issued by Dainippon Tosho, March 25, 1968) .

In Fig. 1, reference numeral 1 is a seal ring fitting apparatus according to this embodiment, which comprises a framework 2, a seal ring supply device 3 disposed to the left side of the framework 2, a spire tube supply regulating device 4 disposed at the center of the framework 2, and a seal ring fitting device 5.

As shown in Fig. 1, Fig. 3 and Fig. 4, the framework 2 comprises first vertical frames 2A, 2A, second vertical frames 2B, 2B, a first horizontal frame 2C, a second horizontal frame 2D, a third horizontal frame 2E and a fourth horizontal frame 2F. A plate 2G is fixed to the second horizontal frame 2D. A plate 2H is fixed to the third horizontal frame 2E. A first ring plate 2I having an opening at the center is fixed to the fourth horizontal frame 2F.

The seal ring supply device 3 supplies the seal ring 104 to the seal ring fitting device 5.

The spire tube supply regulating device 4 raises the cylindrical spire tube body 102A and positions the raised cylindrical spire tube body 102A in its axial direction (vertical direction) and also a direction (horizontal direction) perpendicular to its axial direction, then lowers the cylindrical spire tube 102 which has the seal ring 104 fitted onto the cylindrical spire tube body 102A to enable its removal.

The seal ring fitting device 5 fits the seal ring 104 supplied by the seal ring supply device 3 on the outer peripheral surface 102C of the step portion 102B of the cylindrical spire tube body 102A.

The seal ring supply device 3, the spire tube supply regulating device 4 and the seal ring fitting device 5 will be described in detail.

The seal ring supply device 3 will be described with reference to Fig. 1, Fig. 3, Figs. 5 and 6, and Fig. 10.

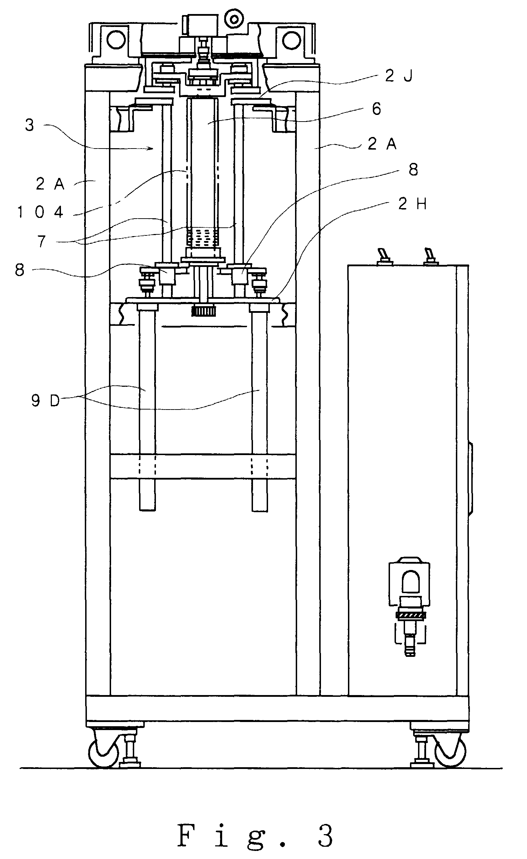

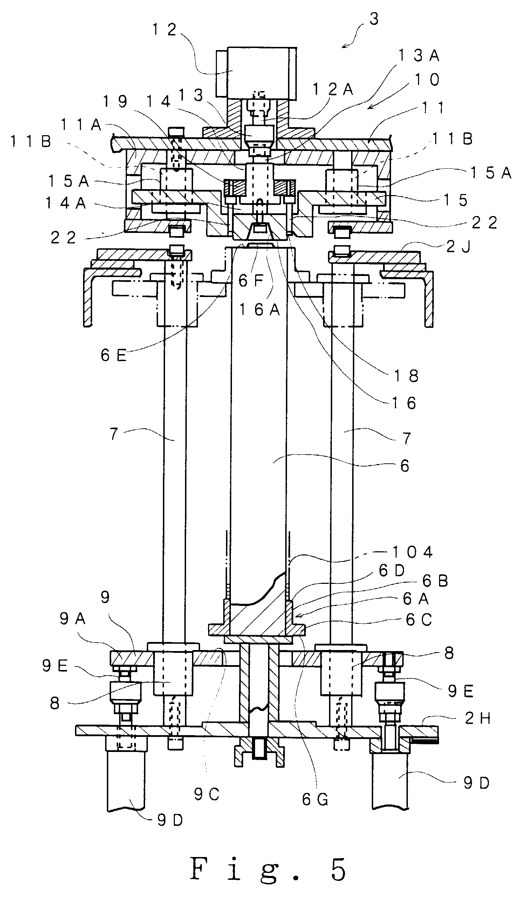

In Fig. 3 and Fig. 5, the plate 2H has a core bar 6 erected vertically, and the bottom end of the core bar 6 is fixed to the plate 2H. The core bar 6 is a shaft having a round cross section and its outer diameter is slightly smaller than an inner diameter of the seal ring 104 so that it can be set in a loosely fitted state through a multiple number of stacked seal rings 104.

A tapered projection 6F having a round cross section is formed on a top 6E of the core bar 6.

A lifter 6A is slidably mounted on the core bar 6. The lifter 6A comprises a cylinder 6B and a circular flange 6C disposed at the bottom end of the cylinder 6B, and a plurality of seal rings 104 are stacked on a top end face 6D of the cylinder 6B.

Fig. 5 shows that the bottom ends of respective guide posts 7, 7 which are made of shafts are fixed to the plate 2H. Top ends of the guide posts 7, 7 are fixed to a plate 2J having a hole at the center and mounted on the first vertical frames 2A, 2A.

First guide members 8, 8, which are formed of cylinders, are slidably inserted on the guide posts 7, 7. A push-up plate 9 is integrally formed on the first guide members 8, 8. Leading ends of rods 9E, 9E of first actuators 9D, 9D which are formed of air cylinders are connected to both ends 9A, 9A of the push-up plate 9, and the first actuators 9D, 9D are mounted on the plate 2H. A top surface 9C of the push-up plate 9 is designed to come in contact with the bottom surface of the round flange 6C of the lifter 6A. The lifter 6A makes vertical motion by the first actuators 9D, 9D.

Reference numeral 10 is a holder device, which is designed to reciprocate in a horizontal direction between the core bar 6 and the seal ring fitting device 5 by a fourth actuator 35 to be described afterward. Fig. 5 shows that the holder device 10 is positioned just above the top 6E of the core bar 6.

The holder device 10 has a first movable block 11 which is formed into a flat box, and a second actuator 12, which is formed of an air cylinder, is mounted on the first movable block 11. A rod 13A is connected to the leading end of a rod 12A of the second actuator 12 through a joint 13. A movable plate 15 is attached to the rod 13A so to move vertically and disposed in the first movable block 11.

The first movable block 11 has a bracket 11A with a square C-shaped cross section and is formed into a flat box as described above. The bracket 11A is provided with guide posts 11B, 11B suspended vertically, and cylindrical guides 15A, 15A formed on the movable plate 15 are made to slide vertically along the guide posts 11B, 11B.

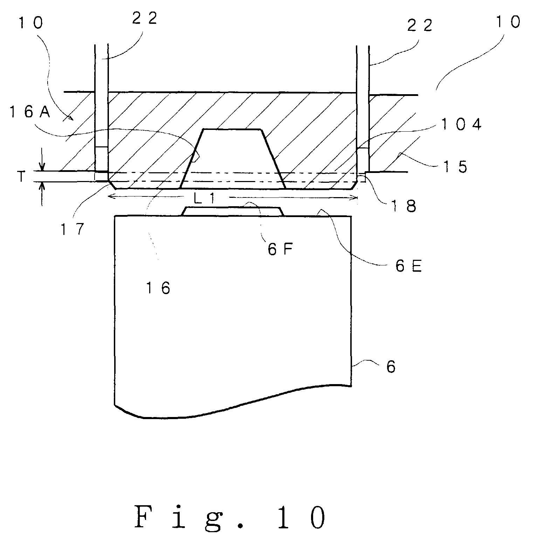

As shown in Fig. 10, a tapered projection having a round cross section is formed at the center of the movable plate 15 to form a ring receiver 18. The bottom surface of the ring receiver 18 is formed as a stopper surface 16 with which the top 6E of the core bar 6 comes in contact. The ring receiver 18 has a height T which is substantially the same as that of a single seal ring 104. The ring receiver 18 has an outer diameter L1 which is about 0.4 mm larger than a free inner diameter (41 mm) of an inner peripheral surface 104A (shown in Fig. 36) of the seal ring 104. And, the ring receiver 18 has a chamfered portion 17 on its leading end so that the seal ring 104 can be fitted on the ring receiver 18. Therefore, the seal ring 104 is easily fitted on the ring receiver 18 without being twisted, and its inner peripheral surface 104A is held on it.

The stopper surface 16 has a tapered recess 16A having a round cross section. The tapered projection 6F of the top 6E of the core bar 6 is fitted into the tapered recess 16A, so that the core bar 6 is aligned with the ring receiver 18 in a horizontal direction.

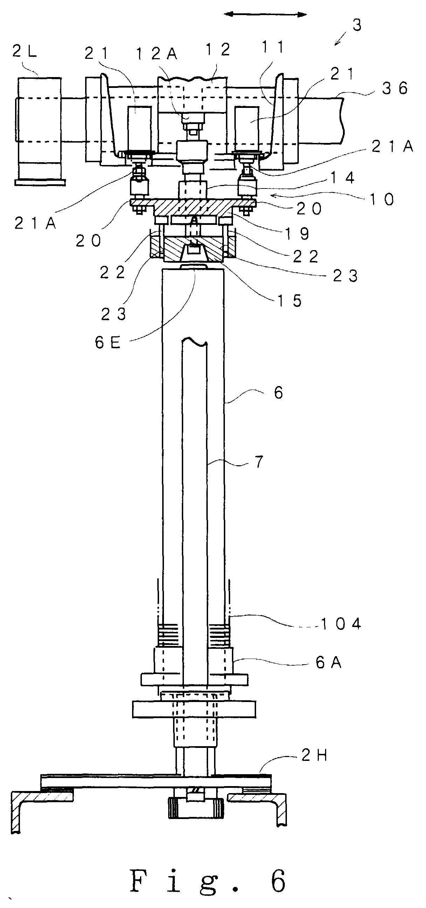

In Fig 5 and Fig. 6, a cylindrical guide 14 is inserted on the rod 13A so to slide vertically. A pin mounting member 19 for a pin 22 is integrally mounted on the cylindrical guide 14. The pin mounting member 19 has plates 20, 20, to which rods 21A, 21A of pin cylinders 21, 21 are connected. The pin cylinders 21, 21 are mounted on the first movable block 11. Four pins 22 (two of them are shown in Fig. 5 and two others in Fig. 6) are fixed to the pin mounting member 19. These pins 22 are vertically movable in guide holes 23 formed in the movable plate 15. Thus, a seal ring withdrawing mechanism is configured to push out downward the seal ring 104, which is set on the ring receiver 18 by the respective pins 22, by operating the pin cylinders 21, 21.

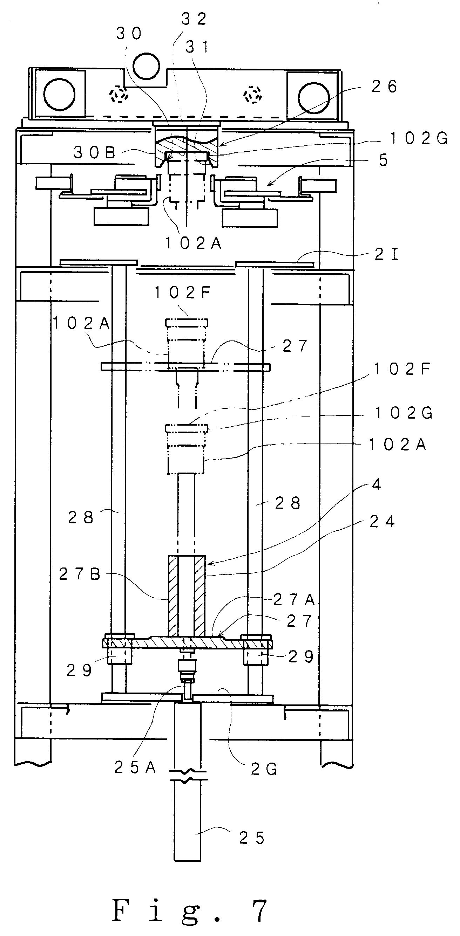

The spire tube supply regulating device 4 will be described with reference to Fig. 7.

In the drawing, the spire tube supply regulating device 4 has a spire tube jig stand 24 for setting the cylindrical spire tube body 102A, a third actuator 25 formed of an air cylinder to vertically move the spire tube jig stand 24, and a spire tube positioning jig 26 for positioning the cylindrical spire tube body 102A in its axial direction (vertical direction) and a direction (horizontal direction) perpendicular to the axial direction.

The spire tube jig stand 24 comprises a plate 27 for supporting the cylindrical spire tube body 102A and a cylinder 27B fixed to a top surface 27A of the plate 27 and having an inner diameter sufficient to insert the cylindrical spire tube body 102A therein. The cylindrical spire tube body 102A is inserted into the cylinder 27B and set on the top surface 27A of the plate 27.

Respective bottom ends of guide posts 28, 28 formed of shafts are fixed to the plate 2G, and respective top ends of the guide posts 28, 28 are fixed to the first ring plate 2I.

Third guide members 29, 29 which are cylindrical are slidably inserted on the guide posts 28, 28. The third guide members 29, 29 are integrally formed at both ends of the plate 27, and the leading end of a rod 25A of the third actuator 25 is connected to the center of the plate 27.

The spire tube positioning jig 26 comprises a round hole 30 having a diameter so to have a fine clearance with the outer peripheral surface of a top end 102G of the cylindrical spire tube body 102A when it is inserted, a tapered guide hole 31 concentrically continuous from the round hole 30, and a reception surface 32 to which a top surface 102F of the cylindrical spire tube body 102A is contacted. The top surface 102F of the cylindrical spire tube body 102A set on the spire tube jig stand 24 is pushed against the reception surface 32 to make positioning of the cylindrical spire tube body 102A in the axial direction (vertical direction), and the cylindrical spire tube body 102A is positioned in a direction (horizontal direction) perpendicular to the axial direction of the cylindrical spire tube body 102A by the inner wall surface 30B of the circular hole 30 of the spire tube positioning jig 26.

As shown in Fig. 1, the holder device 10 of the seal ring supply device 3 and the spire tube positioning jig 26 of the spire tube supply regulating device 4 are disposed on the framework 2 with a given distance between them and moved horizontally by a fourth actuator 35 which is formed of an air cylinder.

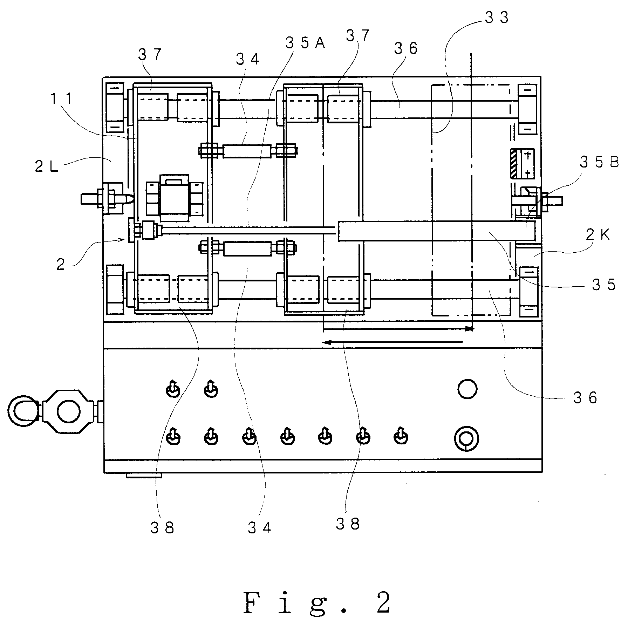

More specifically, as shown in Fig. 1 and Fig. 2, the spire tube positioning jig 26 is disposed on a second movable block 33, and the second movable block 33 and the first movable block 11 are integral through joint rods 34, 34. The leading end of a rod 35A of the fourth actuator 35 is connected to the first movable block 11, and a base end 35B of the fourth actuator 35 is fitted to a fifth horizontal frame 2K stretched between the second vertical frames 2B, 2B.

A sixth horizontal frame 2L is stretched between the first vertical frames 2A, 2A, and rods 36, 36 are connected to the fifth horizontal frame 2K and the sixth horizontal frame 2L. The rods 36, 36 are horizontally disposed on both sides of the fourth actuator 35 in the seal ring transfer direction. Fourth guide members 37, 37 formed of cylinders are slidably inserted on one of the rods 36 (the upper one in Fig. 2) and fixed to the first movable block 11 and the second movable block 33 respectively. Fourth guide members 38, 38 formed of cylinders are slidably inserted on the other rod 36 (the lower one in Fig. 2) and fixed to the first movable block 11 and the second movable block 33 respectively.

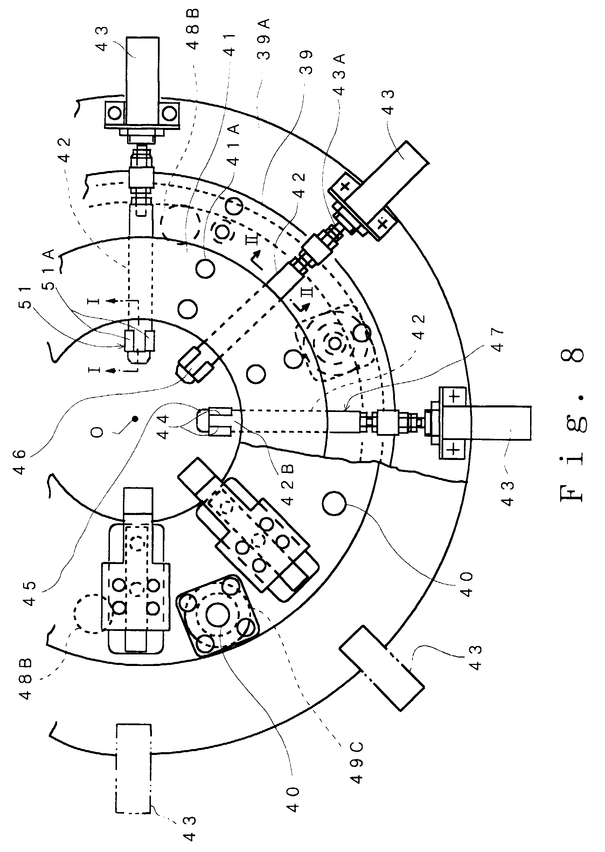

The seal ring fitting device 5 will be described with reference to Fig. 8, Fig. 9, Fig. 11 and Fig. 12.

In the drawings, the second ring plate 39 is supported to position above the first ring plate 2I through a plurality of posts 40. A third ring plate 41 is screwed to position above the second ring plate 39 so to restrict a plurality of long blocks 42 from above.

A plurality of grooves 42C are formed in the second ring plate 39 in order to guide the long blocks 42, and the long blocks 42 having a square cross section (eight of them are formed in the seal ring fitting apparatus according to this embodiment but only three are shown in Fig. 8) are radially disposed around the center point O at given intervals along the grooves 42C formed in the radial direction. An outer end 42A of each long block 42 is connected to a rod 43A of a fifth actuator 43 formed of an air cylinder mounted on a ring plate 39A which is fixed to the second ring plate 39. Grooves 44, 44 are vertically formed on both sides of each long block 42 at an inner end 42B of the long block 42. A expansion nib 45 is formed on the inner end 42B of the long block 42 closer to the center point O. A ring rest 46 is formed on the top surface of the long block 42 and next to the expansion nibs 45. The ring rest 46 receives the seal ring 104 which is transferred by the seal ring supply device 3.

At the inner end 42B of the long block 42, the expansion nibs 45 is formed to project upward above the ring rest 46. Eight expansion nibs 45 corresponding to the eight long blocks 42 are arranged to form a circle. The expansion nibs 45 are selected to be a closed state by contracting inward so to insert the seal ring 104 on them or an open state by opening outward so to expand the seal ring to enlarge its diameter.

When the seal ring 104 which is curved to deform in a vertical direction is placed on the ring rest 46 and expanded, the seal ring 104 may be disengaged from the expansion nibs 45 and not enlarged if a height of the expansion nibs 45 from the top surface of the ring rest 46 is about equal to that of the seal ring 104. Therefore, the expansion nibs 45 is preferably about two times higher than the seal ring 104 in order to prevent the seal ring 104 from being disengaged.

Seal ring diameter expanding means 47 comprises the eight expansion nibs 45 formed on the respective long blocks 42 and fifth actuators 43 connected to the respective eight expansion nibs 45 through the eight long blocks 42. The seal ring diameter expanding means 47 opens or closes the eight expansion nibs 45 by radially operating them by the fifth actuators 43.

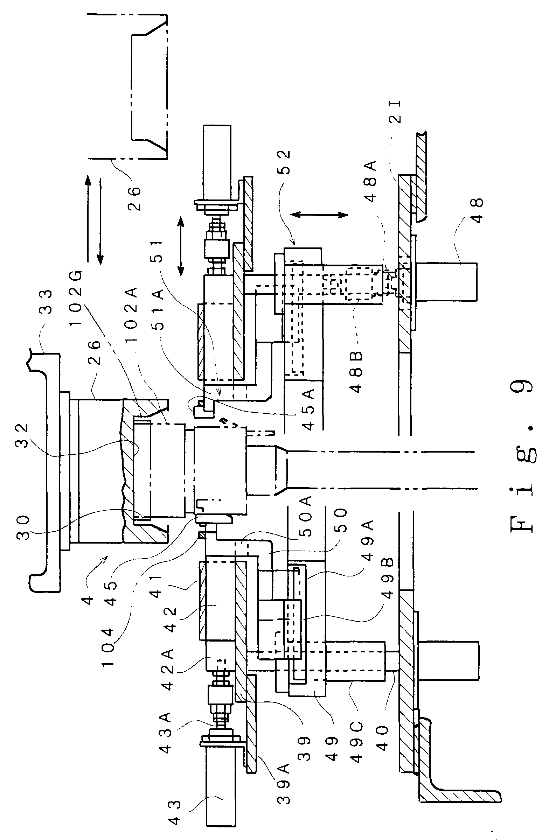

As shown in Fig. 9, sixth actuators 48 formed of pin cylinders are formed to suspend from the first ring plate 2I.

Four cylindrical guides 49C are integrally formed on a ring horizontal sliding member 49 which comprises a rail 49A and a guide block 49B slidable on the rail 49A. These cylindrical guides 49C are inserted on four of the plurality (eight in the embodiment) of posts 40. Two sixth actuators 48 are connected to the horizontal sliding member 49 through a rod 48A and a joint 48B of the sixth actuators 48.

An L-shaped arm 50 is mounted on the guide block 49B, and the leading end of a vertical section 50A of the arm 50 forms a disengaging nib 51 which comprises a pair of lugs 51A, 51A engaged with the grooves 44, 44 of the long blocks 42.

The disengaging nib 51 is free to protrude or sink from the top surface of the ring rest 46 of the long block 42 to the top surface 45A of the expansion nibs 45 and corresponds to each expansion nib 45 of the seal ring diameter expanding means 47. The eight disengaging nibs 51 are arranged to form a circle.

A seal ring removing means 52 comprises eight disengaging nibs 51, one horizontal sliding member 49 on which the eight rails 49A are placed, and the two sixth actuators 48 for vertically moving the horizontal sliding member 49. When the rods 48A of the sixth actuators 48 are extended, the disengaging nibs 51 are raised through the horizontal sliding member 49, the seal ring 104 which has its diameter expanded on the ring rests 46 by the expansion nibs 45 is pushed upward by the expansion nibs 45 and removed.

And, when the eight expansion nibs 45 are radially operated to open or close by the seal ring diameter expanding means 47, the eight disengaging nibs 51 are horizontally operated in communication with the opening or closing the eight expansion nibs 45 through the horizontal sliding member 49.

Action of this embodiment will be described.

The method for fitting the seal ring uses the seal ring fitting apparatus according to this embodiment and comprises a setting step including a seal ring loading step, a setting step of the cylindrical spire tube body, and a seal ring fitting step. The entire process of the seal ring fitting method will be described first, and the seal ring loading step will be described next in detail. Then, the seal ring fitting step will be described in detail.

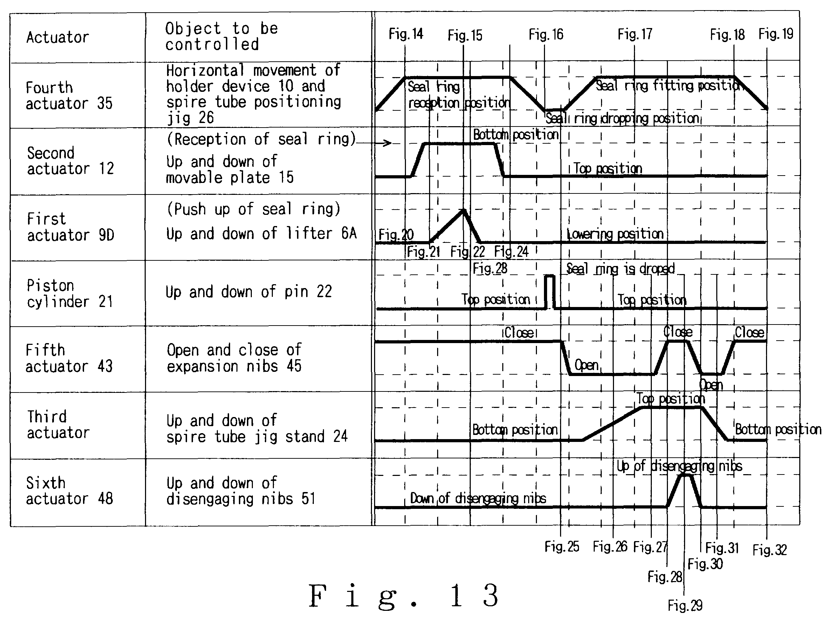

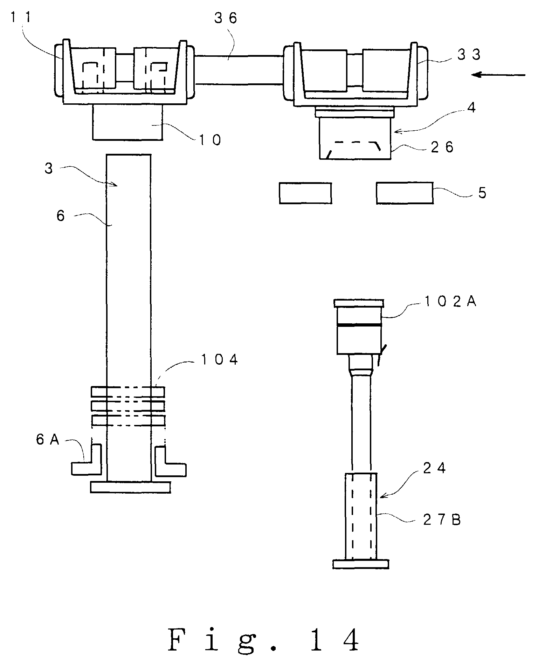

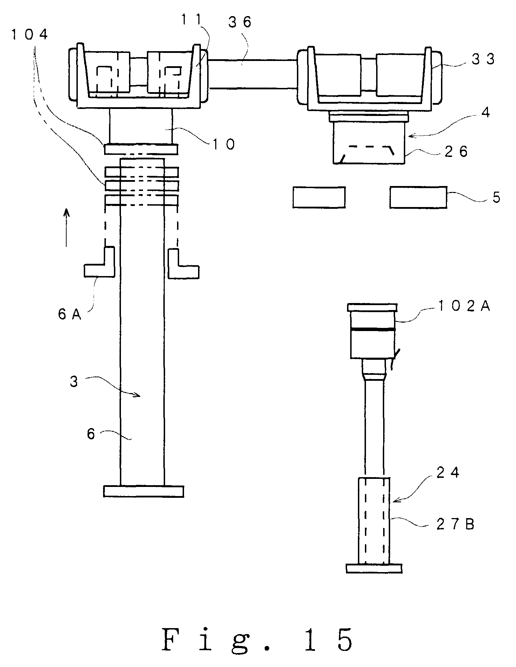

Fig. 13 shows a relation among the respective steps of the seal ring fitting method.

The seal ring fitting method in its entirety will be described with reference to Fig. 13 through Fig. 19.

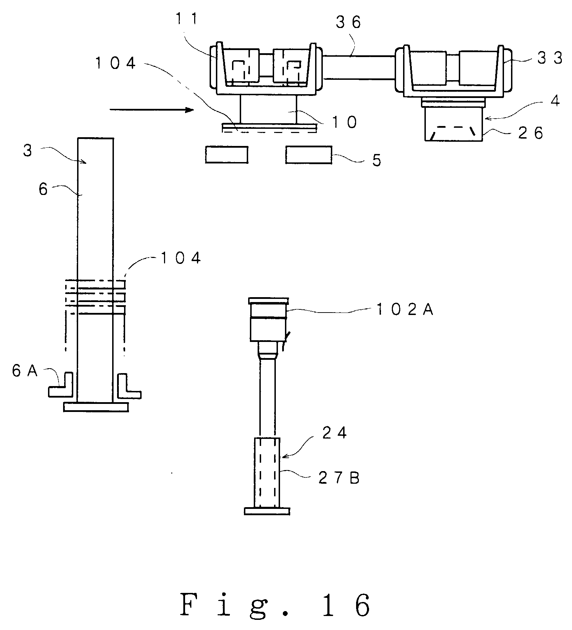

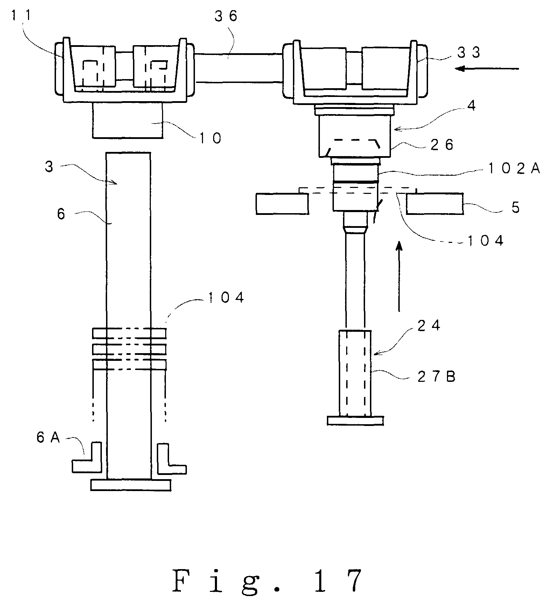

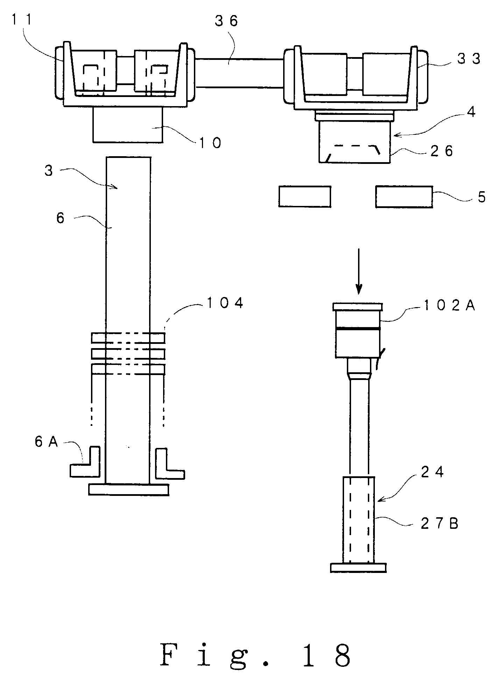

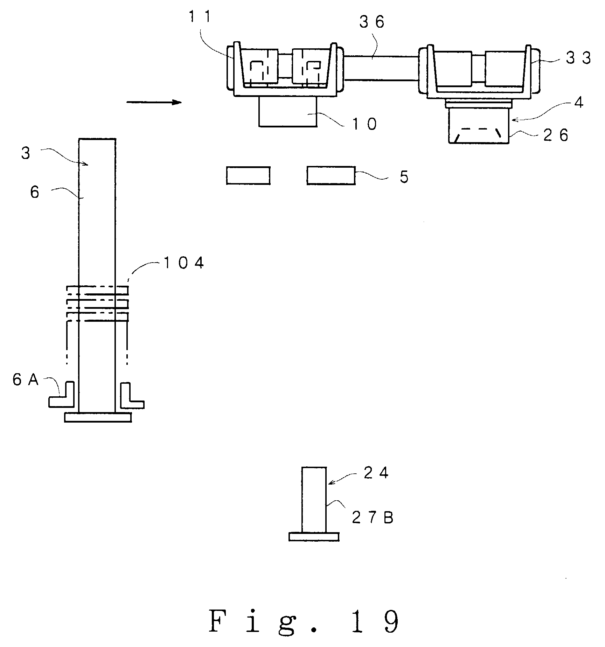

The cylindrical spire tube 102 is produced in order of an initial step (Fig. 14) → a loading step of the seal ring and the cylindrical spire tube body (Fig. 15) → a seal ring transfer step (Fig. 16) → a seal ring fitting step (Fig. 17) → an unloading step of the cylindrical spire tube (Fig. 18) → a removal step of the cylindrical spire tube (Fig. 19) .

In Fig. 14 showing the initial step, a plurality of seal rings 104 are inserted on the core bar 6 to stack on it.

The first movable block 11 is horizontally moved by the fourth actuator 35 shown in Fig. 2 to transfer the holder device 10 horizontally (so to be positioned as shown in the drawing). Thus, the holder device 10 is positioned above the core bar 6.

At this time, the spire tube jig stand 24 which is empty is lowered, and the cylindrical spire tube body 102A is set on the spire tube jig stand 24.

As shown in Fig. 15, the plurality of seal rings 104 are then raised along the core bar 6 by the lifter 6A.

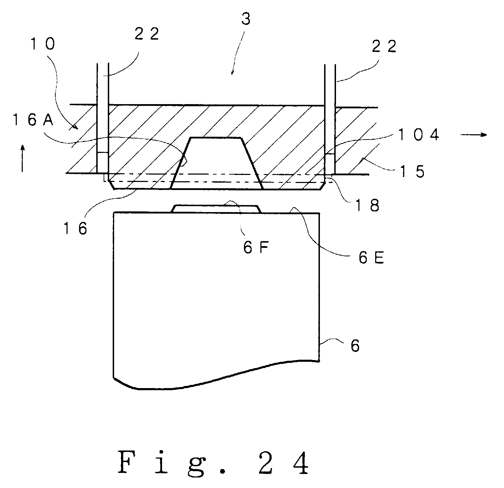

Fig. 24 shows that the uppermost seal ring 104 is transferred from the core bar 6 to the ring receiver 18, and the inner peripheral surface 104A of the transferred seal ring 104 is held by the ring receiver 18 (will be described in detail afterward)

Fig. 16 shows that the first movable block 11 is horizontally transferred (rightward in Fig. 16) by the fourth actuator 35 shown in Fig. 2, so that the holder device 10 is moved horizontally to above the seal ring fitting device 5. Thus, the seal ring 104 held by the ring receiver 18 is moved to above the seal ring fitting device 5 as shown in the drawing.

The seal ring 104, which is set on the ring receiver 18 by the seal ring withdrawing mechanism of the holder device 10 is pushed to drop downward so to be supplied to the seal ring fitting device 5.

The second movable block 33 is transferred horizontally (leftward in Fig. 17) by the fourth actuator 35 shown in Fig. 2, so that the holder device 10 is moved horizontally (leftward in Fig. 17) and removed from the seal ring fitting device 5, and the spire tube positioning jig 26 as well as the second movable block 33 are reached above the seal ring fitting device 5.

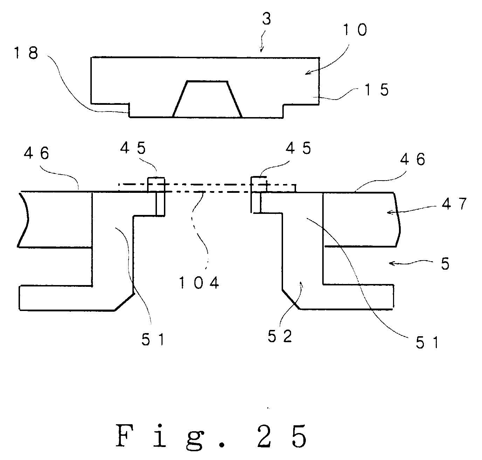

The cylindrical spire tube body 102A set on the spire tube jig stand 24 is raised to a state as shown in Fig. 17. The seal ring fitting step (Fig. 25 through Fig. 32) fits the seal ring 104 onto the cylindrical spire tube body 102A (will be described in detail afterward) to fabricate the cylindrical spire tube 102.

Sequentially, the spire tube jig stand 24 is lowered as shown in Fig. 18, the cylindrical spire tube 102 in the spire tube jig stand 24 is unloaded to a state as shown in the drawing.

Furthermore, as shown in Fig. 19, the cylindrical spire tube 102 in the spire tube jig stand 24 is removed, the first and second movable blocks 11, 33 are transferred horizontally (rightward in Fig. 19) to a state shown in Fig. 19. Thus, a series of steps are completed.

Back to Fig. 14 from Fig. 19, the operation is repeated, the supply of the cylindrical spire tube body 102A and the seal ring 104, the positioning, and the fitting of the seal ring 104 onto the cylindrical spire tube body 102A are automatically performed sequentially, and the cylindrical spire tube 102 is automatically fabricated continuously.

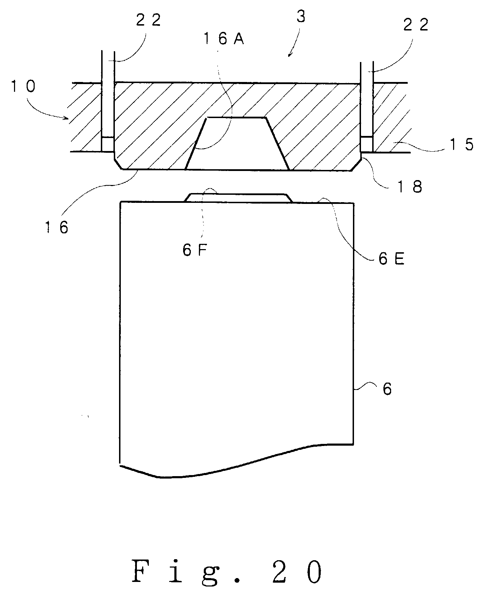

Now, the first sub-step to the fifth sub-step of the loading step for the seal ring 104 will be described with reference to Fig. 20 through Fig. 24.

The first sub-step of the loading step for the seal ring is shown in Fig. 20.

Fig. 20 shows a state that the holder device 10 is moved horizontally along the core bar 6 as shown in Fig. 14.

The stopper surface 16 of the movable plate 15 of the holder device 10 is located above the top 6E of the core bar 6 with a given distance away.

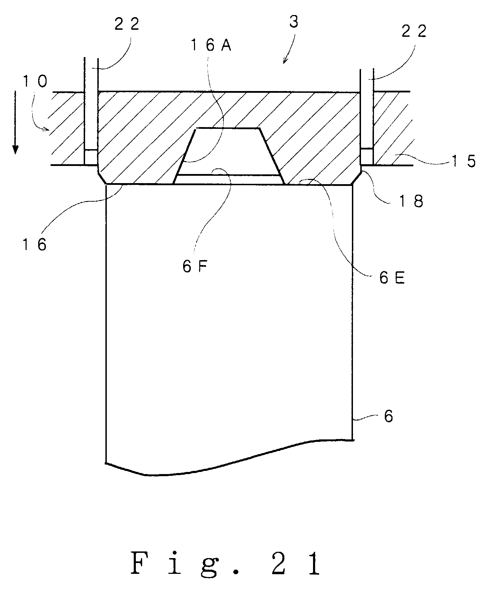

The second sub-step of the seal ring loading step is shown in Fig. 21.

Fig. 21 shows that the movable plate 15 is lowered by the second actuator 12 of the holder device 10 shown in Fig. 5. The stopper surface 16 of the movable plate 15 comes in contact with the top 6E of the core bar 6, and at the same time, the tapered projection 6F of the top 6E of the core bar 6 is engaged with the tapered recess 16A of the stopper surface 16, thereby aligning the core bar 6 with the ring receiver 18. Thus, the relational position between the horizontal position of the ring receiver 18 and the core bar 6 are secured.

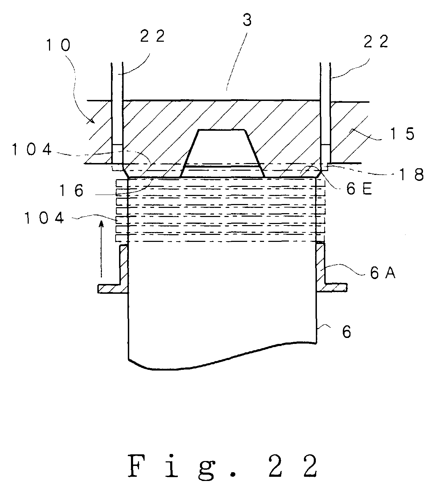

Fig. 22 shows the third sub-step of the seal ring loading step.

In Fig. 22, the plurality of stacked seal rings 104 are raised along the core bar 6 by the lifter 6A as illustrated. The uppermost seal ring 104 is transferred to the ring receiver 18 by the lifter 6A and slightly enlarged in diameter, and the inner peripheral surface 104A of the uppermost seal ring 104 is held on the ring receiver 18 by friction.

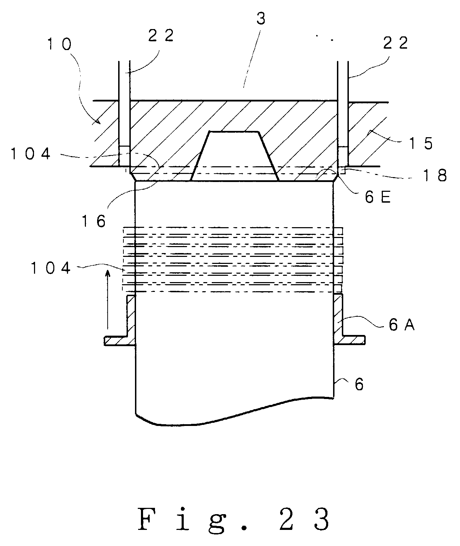

The fourth sub-step of the seal ring loading step is shown in Fig. 23.

In Fig. 23, the uppermost seal ring 104 remains on the ring receiver 18 as the lifter 6A lowers, and the plurality of other stacked seal rings 104 are lowered along the core bar 6, the pushing force against the uppermost seal ring 104 is released as illustrated.

The fifth sub-step of the seal ring loading step is shown in Fig. 24.

In Fig. 24, the movable plate 15 is raised from the state shown in Fig. 23 by the second actuator 12 of the holder device 10 shown in Fig. 5. Thus, the stopper surface 16 of the movable plate 15 is positioned a given distance away from the top 6E of the core bar 6.

Thus, the uppermost seal ring 104 is transferred from the core bar 6 to the ring receiver 18.

Now, the first to eighth sub-steps of the seal ring fitting step will be described in detail with reference to Fig. 25 through Fig. 32.

Fig. 25 shows the first sub-step of the seal ring fitting step.

In the first sub-step, the seal ring 104 set on the ring receiver 18 is pushed down to be released from the state shown in Fig. 15 by a seal ring withdrawing mechanism of the holder device 10, dropped to be supplied upon the top surface of the ring rest 46 of the seal ring fitting device 5 and set around the eight closed expansion nibs 45.

At the time, the eight expansion nibs 45 on the seal ring fitting device 5 gather at the center in a closed state by the seal ring diameter expanding means 47.

And, the cylindrical spire tube body 102A set on the spire tube jig stand 24 is in a lowered position (shown in Fig. 16).

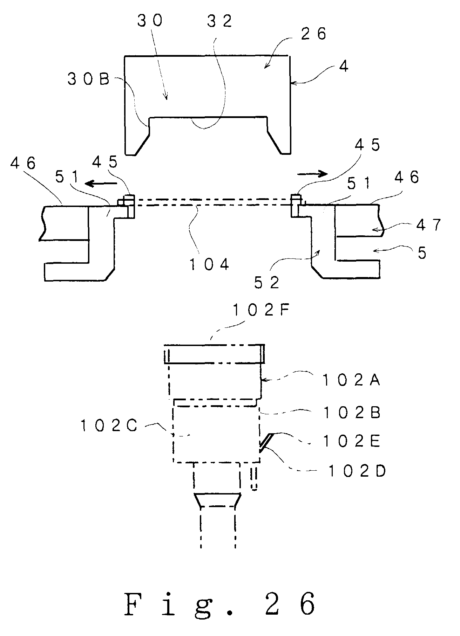

Fig. 26 shows the second sub-step of the seal ring fitting step.

In the second sub-step, the eight expansion nibs 45 are made to select an expanding size of diameter by the seal ring diameter expansion means 47 and opened radially from the center so that the seal ring 104 is set on the eight expansion nibs 45 and expanded.

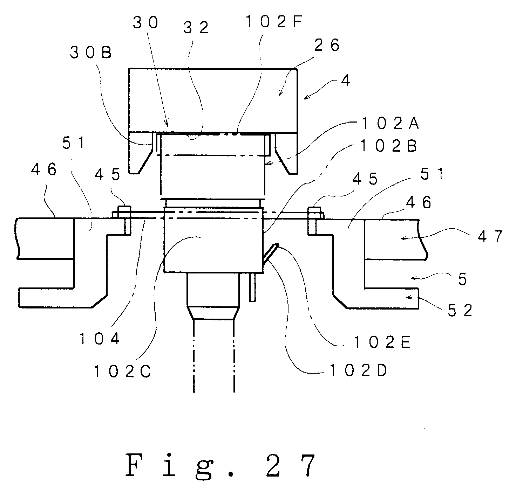

The third sub-step of the seal ring fitting step is shown in Fig. 27.

In the third sub-step, the cylindrical spire tube body 102A set on the spire tube jig stand 24 shown in Fig. 17 is raised to pass through the seal ring 104. The top surface 102F of the cylindrical spire tube body 102A is pushed against the reception surface 32 of the spire tube positioning jig 26 to determine the vertical position of the cylindrical spire tube body 102A. The cylindrical spire tube body 102A is determined its horizontal direction by the inner wall surface 30B of the circular hole 30 of the spire tube positioning jig 26. Thus, the seal ring 104 is aligned with the cylindrical spire tube body 102A.

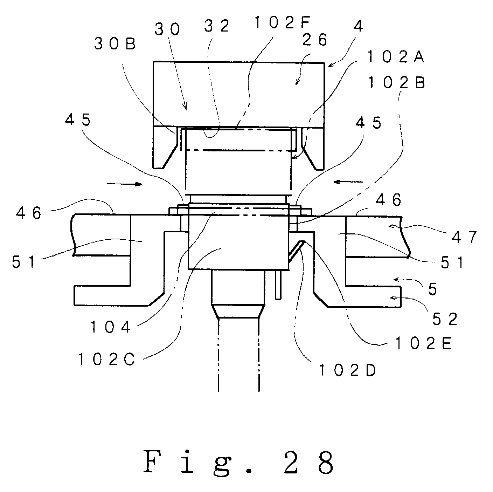

The fourth sub-step of the seal ring fitting step is shown in Fig. 28.

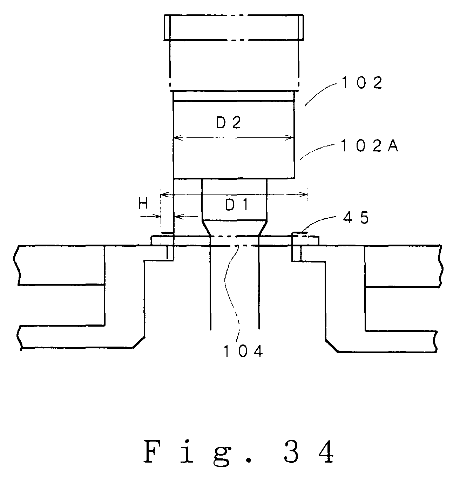

In the fourth sub-step, the eight expansion nibs 45 are closed from the state shown in Fig. 27 to come in contact with the outer peripheral surface 102C of the step portion 102B of the cylindrical spire tube body 102A. At this time, the seal ring 104 is engaged on the respective expansion nibs 45 in a state that its diameter is expanded from a free diameter by a step portion level H shown in Fig. 34.

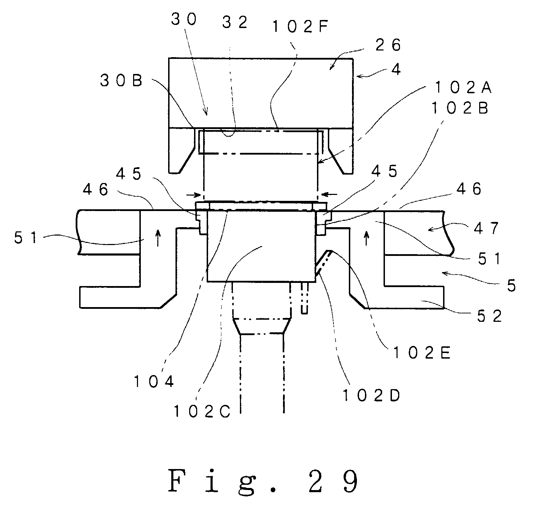

The fifth sub-step of the seal ring fitting step is shown in Fig. 29.

In the fifth sub-step, the seal ring 104 set on the respective expansion nibs 45 is pushed upward by the eight disengaging nibs 51 disposed to correspond with the respective expansion nibs 45 and released from the respective expansion nibs 45.

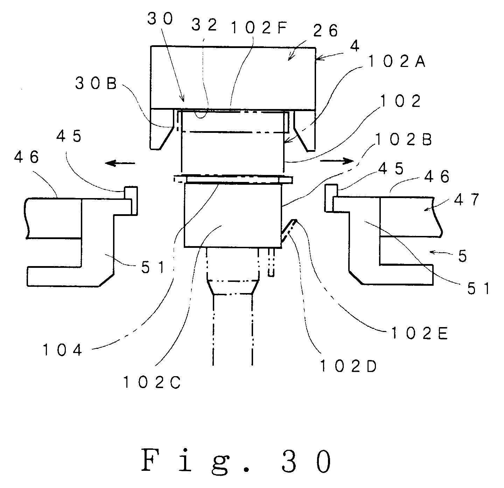

The sixth sub-step of the seal ring fitting step is shown in Fig. 30.

In the sixth sub-step, the seal ring 104 is released from the respective expansion nibs 45 to contract its diameter and fit on the outer peripheral surface 102C of the step portion 102B of the cylindrical spire tube body 102A. The cylindrical spire tube 102 is formed of the cylindrical spire tube body 102A and the seal ring 104 which is fitted on the outer peripheral surface 102C of the cylindrical spire tube body 102A.

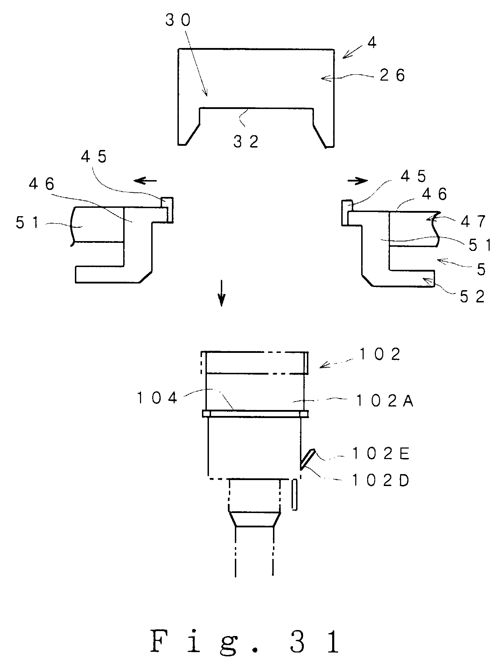

The seventh sub-step of the seal ring fitting step is shown in Fig. 31. The eight expansion nibs 45 have the diameter expansion selected by the seal ring diameter expanding means 47, and radially opened from the center.

In the seventh sub-step, the cylindrical spire tube 102 set on the spire tube jig stand 24 is lowered downward.

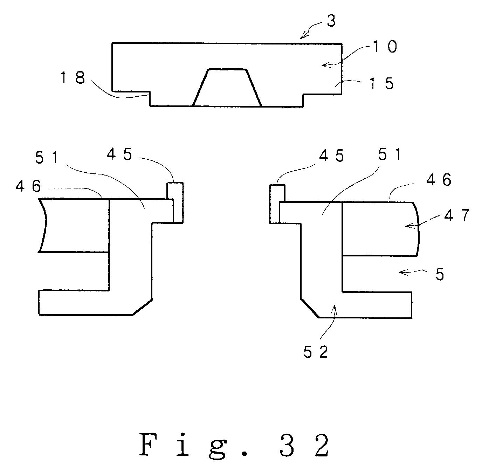

The eighth sub-step of the seal ring fitting step is shown in Fig. 32.

In the eighth sub-step, the eight expansion nibs 45 have the diameter contraction selected by the seal ring diameter expanding means 47 and concentrated in the center to resume to a closed state.

Thus, fitting of the seal ring 104 is completed.

The above-described configuration provides the following effects.

First, the eight expansion nibs 45 are opened to expand the diameter of the seal ring 104 to enable it to fit on the outer peripheral surface 102C of the step portion 102B of the cylindrical spire tube body 102A.

Therefore, the seal ring 104 is uniformly expanded externally. It is not fitted on the outer peripheral surface 102C of the step portion 102B of the cylindrical spire tube body 102A in a state that its two points are extended, local deformation is formed or twisting is caused. The seal ring 104 can be expanded in a round shape at a given ratio by a single operation.

Such effects are checked by the following experiments.

Experiments were conducted under the following conditions (a), (b), (c), (d) .
(a) The step portion 102B of the cylindrical spire tube body 102A has a diameter larger then the inner diameter of the seal ring 104 and not more than 118% of the inner diameter of the seal ring 104.
(b) The seal ring 104 has hardness of 72.
(c) The seal ring 104 has an inner diameter of 41 mm.
(d) The seal ring 104 has a square cross section.

By the experiments conducted under the conditions (a), (b), (c) and (d), the results obtained are shown in Table 1 below.

**Table 1**

| Test piece No. | Outer dia. of expansion nibs D1 (mm) | Outer dia.of cylindrical spire tube body D2 (mm) | Step portion level of seal ring H (mm) | Test times (times) | Success times (times) | Success rate (%) |
|---|---|---|---|---|---|---|
| 1 | 49.3 | 43.3 | 3 | 20 | 1 | 5.0 |
| 2 | 50 | 43.3 | 3.35 | 20 | 3 | 15.0 |
| 3 | 51 | 43.3 | 3.85 | 20 | 12 | 60.0 |
| 4 | 51.9 | 43.3 | 4.3 | 20 | 16 | 80.0 |
| 5 | 52.5 | 43.3 | 4.6 | 20 | 19 | 95.0 |
| 6 | 53.3 | 43.3 | 5 | 20 | 20 | 100.0 |
| 7 | 54 | 43.3 | 5.35 | 20 | 20 | 100.0 |
| 8 | 54.3 | 43.3 | 5.5 | 20 | 20 | 100.0 |
| 9 | 55.5 | 43.3 | 6.1 | 20 | 20 | 100.0 |

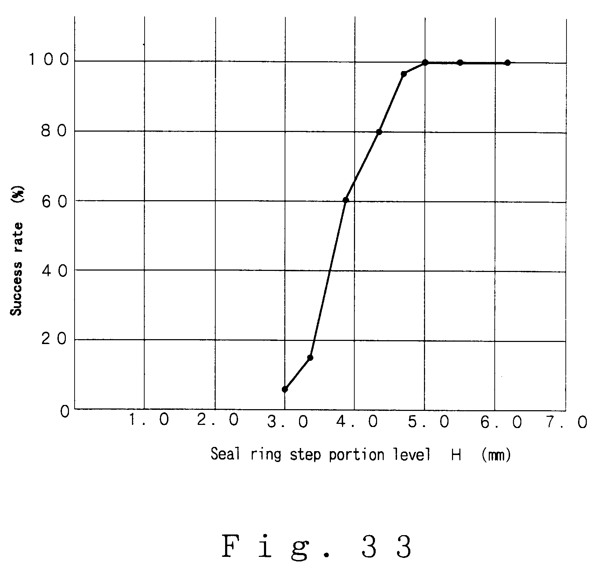

Fig. 33 shows the results obtained by plotting a relation between the seal ring step portion level and the success rate of the seal ring 104 (untwisted times/test times) given in Table 1. In Fig. 33, it is seen that the seal ring 104 has a success rate of 100% or more with the seal ring step portion level of 5 mm or more when the seal ring step portion level of 5 mm from the outer peripheral surface 102C of the step portion 102B of the cylindrical spire tube body 102A to the inner peripheral surface 104A of the seal ring 104 having an expanded diameter is determined as a limit value. Meanings of the outer diameter D1 of the expansion nibs, the outer diameter D2 of the cylindrical spire tube body 102A and the step portion level H of the seal ring given in Table 1 are shown in Fig. 34.

As described above, a series of various operations to fit the seal ring 104 on the outer peripheral surface 102C of the step portion 102B of the cylindrical spire tube body 102A can be performed successively without requiring manual operations by a worker. Thus, the seal ring can be fitted without fail while keeping a given quality fitted condition in a short operation time.

The seal ring 104 having an expanded diameter can be fitted on the spire tube 102 by virtue of a restitutive force of the seal ring 104 which tends to return to its original size while lowering the step portion H without sliding the seal ring 104 along the outer peripheral surface 102C of the step portion 102B of the cylindrical spire tube body 102A.

Particularly, the seal ring 104 can be fitted accurately in position of the cylindrical spire tube body 102A regardless of the stopper portion 102D which is a protruded obstacle when the seal ring 104 is fitted on the outer peripheral surface 102C of the step portion 102B of the cylindrical spire tube body 102A.

Second, a plurality of seal rings 104 set on the core bar 6 are readily separated one by one and transferred to the ring receiver 18 by the seal ring supply device 3. Thus, the seal rings 104 can be prepared for setting with ease and reliability.

Third, the cylindrical spire tube body 102A can be set in a state inserted on the spire tube jig stand 24 because the spire tube positioning jig 26 and the spire tube jig stand 24 are separately disposed. Thus, the cylindrical spire tube body 102A can be set on the spire tube jig stand 24 with ease.

The cylindrical spire tube body 102A can be positioned in the round hole 30 of the spire tube positioning jig 26 in a direction (horizontal direction) perpendicular to the axial direction of the cylindrical spire tube body 102A and positioned on the receiving surface 32 of the spire tube positioning jig 26 in the axial direction (vertical direction) of the cylindrical spire tube body 102A. Thus, the cylindrical spire tube body 102A can be positioned with ease.

Fourth, the holder device 10 of the seal ring supply device 3 is moved from the seal ring supply device 3 onto the seal ring fitting device 5, and the seal ring 104 can be supplied automatically to the seal ring fitting device 5.

In the embodiment described, description was made of a case that the cylindrical spire tube body 102A had the stopper portion 102D as a projection forming an obstacle when the seal ring 104 was fitted onto the outer peripheral surface 102 of the step portion 102B of the cylindrical spire tube body 102A. But the projection is not limited to the stopper portion 102D, and another obstacle projection or recess can be formed on the outer peripheral surface 102C of the step portion 102B of the cylindrical spire tube body 102A.

In the embodiment, description was also made of a case that the seal ring for a keg neck was fitted as an example of the seal ring on the outer peripheral surface of the step portion of the cylindrical spire tube body for a keg. But, the container is not limited to a keg and the seal ring is not limited to one for a keg neck. The invention can be applied to seal lings for the fields of food and industrial products.

In addition, the embodiment describes a seal ring withdrawing mechanism for downwardly removing the seal ring 104 set on the ring receiver 18 by means of respective pins 22 by operating the pin cylinders 21, 21. But, the invention is not limited to such a seal ring withdrawing mechanism. For example, an air passage may be formed through a side wall of the ring receiver 18 of the movable plate 15 to blow air therethrough, thereby enabling to withdraw downward the seal ring 104 set on the ring receiver 18.

The expansion nibs and the disengaging nibs are eight each in the embodiment but may be five, seven or nine or more.

Besides, this embodiment has the seal ring diameter expanding means 47 with the fifth actuators 43 respectively connected to eight expansion nibs 45, but a plurality of expansion nibs 45 can be opened or closed simultaneously by operating an appropriate mechanism by means of one actuator without connecting the fifth actuators 43 to the plurality of expansion nibs 45.

The ring rest 46 and the expansion nibs 45 are formed on the long blocks 42 in the embodiment but may be formed separately. For example, the ring rest 46 can be disposed independent of the long block 42.

The ring receiver 18 for receiving the seal ring 104 is a tapered projection with a round cross section in the embodiment. But it is not limited to such a structure and can be configured so to expand the diameter of the seal ring 104 and to hold its inner portion.

The respective steps of the seal ring fitting method of the embodiment are shown in Fig. 13 but not limited to the procedures shown in Fig. 13. For example, it is seen in Fig. 13 that when a single seal ring 104 is being fitted, setting of another seal ring 104 from the core bars 6 to the ring receiver 18 is not made. But setting of another seal ring 104 from the core bar 6 to the ring receiver 18 can be made previously even when fitting of one seal ring 104 is being made.

## Claims

1. A seal ring fitting method for fitting a seal ring on an outer peripheral surface of a cylindrical spire tube body, comprising:
arranging four or more expansion nibs in the form of a circle;
setting the seal ring around the respective expansion nibs by centering the four or more expansion nibs;
expanding a diameter of the seal ring in a state engaged with the respective expansion nibs by opening the respective expansion nibs radially from the center;
positioning the cylindrical spire tube body in its axial direction and a direction perpendicular to the axial direction by moving the cylindrical spire tube body and putting it through the expanded seal ring; and
fitting the seal ring onto the cylindrical spire tube body by releasing the seal ring from being engaged with the respective expansion nibs by means of the four or more disengaging nibs disposed so to correspond with the respective expansion nibs.

2. The seal ring fitting method according to claim 1, wherein the seal ring is a seal ring having rubber-like properties and a square cross section, and when it is fitted onto the outer peripheral surface of the cylindrical spire tube body which has a diameter larger than the inner diameter of the seal ring and 118% or below of the inner diameter of the seal ring, a step portion level of the seal ring from the outer peripheral surface of the cylindrical spire tube body to the inner peripheral surface of the expanded seal ring is 5 mm or more.

3. A seal ring fitting apparatus, comprising:
a seal ring supply device for transferring a seal ring;
a spire tube supply regulating device which is configured to supply and remove a cylindrical spire tube body and positions the cylindrical spire tube body in its axial direction and a direction perpendicular to the axial direction; and
a seal ring fitting device which fits the seal ring transferred by the seal ring supply device onto the outer peripheral surface of the cylindrical spire tube body positioned by the spire tube supply regulating device, wherein:
the seal ring fitting device comprises:
a ring rest for receiving the seal ring transferred by the seal ring supply device;
four or more expansion nibs which are disposed toward the inside of the ring rest and to form a circle and selected to have a closed state by contracting inward so to insert the seal ring thereon or an open state by opening outward so to expand the diameter of the seal ring;
a seal ring diameter expanding means which has actuators connected to the respective expansion nibs;
four or more disengaging nibs which are arranged to correspond with the respective expansion nibs to withdraw the seal ring engaged with the respective expansion nibs from the respective expansion nibs; and
a seal ring removing means having an actuator for transferring the disengaging nibs.

4. The seal ring fitting apparatus according to claim 3, wherein the seal ring supply device comprises:
a core bar which is vertically positioned and on which a plurality of stacked seal rings can be inserted;
a lifter which is slidably mounted on the core bar and has the plurality of stacked seal rings placed thereon;
an actuator for vertically moving the lifter; and
a holder device which is horizontally movable between the core bar and the seal ring fitting device; and
the holder device comprises:
a movable block which is movable onto the seal ring fitting device;
a movable plate which is mounted on the movable block and vertically movable;
an actuator which is mounted on the movable block and vertically moves the movable plate;
a ring receiver which is formed in a protruded shape on a stopper surface of the movable plate to hold the inner peripheral surface of the seal ring; and
a seal ring withdrawing mechanism which is mounted on the movable plate to push out downward the seal ring which is set on the ring receiver.

5. The seal ring fitting apparatus according to claim 3 or 4, wherein the spire tube supply regulating device comprises:
a spire tube jig stand on which the cylindrical spire tube body is set;
an actuator for vertically moving the spire tube jig stand; and
a spire tube positioning jig disposed above the spire tube jig stand; and
the spire tube positioning jig has a round hole in which the top end of the cylindrical spire tube body is inserted and a receiving surface to which the top surface of the cylindrical spire tube body is contacted.

6. The seal ring fitting apparatus according to any one of claims 3 through 5, wherein a holder device of the seal ring supply device and the spire tube positioning jig of the spire tube supply regulating device are mounted on a framework so to be movable horizontally with a given distance therebetween.
